(19) **Europäisches Patentamt / European Patent Office / Office européen des brevets**

(11) **EP 3 605 666 A1**

(12) **EUROPEAN PATENT APPLICATION**
published in accordance with Art. 153(4) EPC

(43) Date of publication:
**05.02.2020 Bulletin 2020/06**

(21) Application number: **18775734.9**

(22) Date of filing: **20.03.2018**

(51) Int Cl.:
*H01M 4/13* (2010.01)        *H01M 4/64* (2006.01)
*H01M 4/66* (2006.01)

(86) International application number:
**PCT/JP2018/010938**

(87) International publication number:
**WO 2018/180742 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2017 JP 2017067413**

(71) Applicant: **Showa Denko K.K.**
**Tokyo 105-8518 (JP)**

(72) Inventor: **NAKAMURA Takeshi**
**Tokyo 105-8518 (JP)**

(74) Representative: **Strehl Schübel-Hopf & Partner**
**Maximilianstrasse 54**
**80538 München (DE)**

(54) **POSITIVE ELECTRODE FOR LITHIUM ION SECONDARY CELL, AND LITHIUM ION SECONDARY CELL**

(57) [Object]

An electrode for lithium ion secondary batteries is provided which offers good high-current characteristics and high durability even when the void content in the electrode is sufficiently increased. A lithium ion secondary battery having such an electrode is provided.

[Solution]

A positive electrode for lithium ion secondary batteries includes a current collector including a sheet-shaped conductive substrate and a coating layer disposed on one or both sides of the conductive substrate, and a positive electrode active material layer disposed on the coating layer, wherein the coating layer includes a powdery conductive material and a first binder, the positive electrode active material layer includes a positive electrode active material, a conductive auxiliary and a second binder, the void content in the positive electrode active material layer is 43 to 64%, and the difference represented by (Ra1 - Ra2) is 0.10 to 0.40 $\mu$m wherein Ra1 is the surface roughness of the coating layer and Ra2 is the surface roughness of the surface of the conductive substrate covered by the coating layer.

EP 3 605 666 A1

**Description**

TECHNICAL FIELD

The present invention relates to a current collector for lithium ion secondary batteries, and to a positive electrode for lithium ion secondary batteries having the current collector. More particularly, the present invention relates to a positive electrode for lithium ion secondary batteries which can realize excellent high-current characteristics and high durability at the same time, and to a lithium ion secondary battery having the positive electrode.

BACKGROUND ART

Recently, there has been a demand for secondary batteries suited for high-output applications including hybrid automobiles, power tools such as electric tools, and drones. The mainstream batteries for such applications are lithium ion secondary batteries. In particular, when used in power tools and drones, the batteries are fully charged and fully discharged repeatedly. Thus, the batteries are required to be capable of being operated for many hours at a high current and to suffer little deterioration after long use.

In a lithium ion secondary battery that is being charged, lithium ions are released from a positive electrode active material into an electrolytic solution while electrons pass through a positive electrode mixture and are supplied to an external circuit through a current collector. The lithium ions released to the electrolytic solution migrate through the electrode mixture to a negative electrode. Thus, electronic resistance and ion migration resistance are the rate controlling factors in this process.

The electronic resistance will be discussed in detail. In general, the main components of electronic resistance in a positive electrode are contact resistance among positive electrode active material particles, and contact resistance at interfaces between the positive electrode active material and a current collector. Because aluminum foil used as the current collector has a poorly conductive passive layer on its surface, it is known that the contact resistance at interfaces between a positive electrode active material and a current collector represents the major proportion of the electronic resistance in a positive electrode. Thus, usual approaches to reducing the electronic resistance in a positive electrode are to use a conductive auxiliary and to press the positive electrode strongly so as to increase the area of contact among the positive electrode constituent materials, that is, to reduce the void content.

Unfortunately, less void contents provide smaller spaces for containing an electrolytic solution and lead to an increase in lithium ion migration resistance. Thus, the conventional positive electrode design has to be compromised due to the fact that the void content that is available is limited to a very narrow range which offers low electronic resistance and does not give rise to an increase in ion migration resistance.

Meanwhile, attempts have been made in which a high output is attained by increasing the void content in an electrode and thereby reducing the ion migration resistance. Patent Literature 1 discloses that the void content in an electrode is controlled to a specific range and thereby the lithium ion diffusion resistance can be reduced. This document also shows that an excessively high void content leads to an increased electronic resistance, and the void content is still limited to a narrow range.

Patent Literature 2 discloses that an electrode containing iron lithium phosphate as a positive electrode active material is designed so that a graphite conductive layer is disposed on a current collector foil and the void content in the positive electrode active material layer is controlled to a predetermined range. According to the disclosure, this design equalizes the distribution of lithium ion concentrations. Further, the document discloses that life characteristics are enhanced by increasing the thickness of the conductive layer. However, no relationship is identified between the void content in the electrode and the life characteristics.

CITATION LIST

PATENT LITERATURE

Patent Literature 1: Japanese Patent No. 5371032
Patent Literature 2: JP-A-2015-56318

## SUMMARY OF INVENTION

### TECHNICAL PROBLEM

According to the conventional techniques, there has been a tradeoff. That is, the electronic resistance is reduced by lessening the void content in an electrode, but this approach sacrifices lithium ion migration resistance. If, on the other hand, the void content is increased excessively, the lithium ion migration resistance is lowered at cost of electronic resistance.

Objects of the present invention are to provide an electrode for lithium ion secondary batteries which exhibits a low electronic resistance through the electrode even when the void content in the electrode is sufficiently increased, that is, the lithium ion migration resistance is sufficiently lowered, and which thereby offers good high-current characteristics and high durability, and to provide a lithium ion secondary battery having such an electrode.

### SOLUTION TO PROBLEM

The present inventor carried out extensive studies directed to achieving the above objects, and consequently completed the present invention including the following aspects.

[1] A positive electrode for lithium ion secondary batteries, including a current collector including a sheet-shaped conductive substrate and a coating layer disposed on one or both sides of the conductive substrate, and a positive electrode active material layer disposed on the coating layer, wherein
the coating layer includes a powdery conductive material and a first binder,
the positive electrode active material layer includes a positive electrode active material, a conductive auxiliary and a second binder,
the void content in the positive electrode active material layer is 43 to 64%, and
the difference represented by (Ra1 - Ra2) is not less than 0.10 $\mu$m wherein Ra1 is the surface roughness of the coating layer and Ra2 is the surface roughness of the conductive substrate covered by the coating layer.
[2] The positive electrode for lithium ion secondary batteries described in the above 1, wherein the void content in the positive electrode active material layer is 56 to 64%.
[3] The positive electrode for lithium ion secondary batteries described in the above 1 or 2, wherein the powdery conductive material has a number average particle size of primary particles of 10 to 500 nm.
[4] The positive electrode for lithium ion secondary batteries described in any one of the above 1 to 3, wherein the content of the powdery conductive material in the coating layer is 20 to 80 mass%.
[5] The positive electrode for lithium ion secondary batteries described in any one of the above 1 to 4, wherein the coating amount of the coating layer per side of the conductive substrate is 0.1 to 5.0 g/m$^2$.
[6] The positive electrode for lithium ion secondary batteries described in any one of the above 1 to 5, wherein the first binder is a polysaccharide.
[7] The positive electrode for lithium ion secondary batteries described in any one of the above 1 to 6, wherein the 50% particle size $D_{50}$ in a volume-based cumulative grain size distribution of the positive electrode active material is 1.0 to 20.0 $\mu$m.
[8] The positive electrode for lithium ion secondary batteries described in any one of the above 1 to 7, wherein the content of the positive electrode active material in the positive electrode active material layer is 70.0 to 98.0 mass%.
[9] The positive electrode for lithium ion secondary batteries described in any one of the above 1 to 8, wherein the content of the conductive auxiliary in the positive electrode active material layer is 0.5 to 20.0 mass%.
[10] A lithium ion secondary battery including the positive electrode for lithium ion secondary batteries described in any one of the above 1 to 9.

### ADVANTAGEOUS EFFECTS OF INVENTION

In the electrode for lithium ion secondary batteries according to the present invention, a coating layer with controlled surface roughness is formed on the surface of a conductive substrate to allow a positive electrode active material layer to have a higher void content than the conventional level while ensuring that good electronic resistance is maintained. With this configuration, the ion migration resistance is lowered and the electronic resistance through the electrode is maintained at a low level. Thus, the electrode for lithium ion secondary batteries, and the lithium ion secondary battery that are provided can attain excellent high-current characteristics and high durability.

DESCRIPTION OF EMBODIMENTS

Hereinbelow, detailed description will be given with respect to preferred embodiments of a positive electrode for lithium ion secondary batteries according to the present invention, and of a lithium ion secondary battery including such a positive electrode. The materials, specifications and other configurations that are described in the following embodiments are only illustrative and do not limit the scope of the invention thereto. The present invention may be modified appropriately without departing from the spirit of the invention.

[Current collectors for positive electrodes for lithium ion secondary batteries]

A positive electrode for lithium ion secondary batteries according to a preferred embodiment of the present invention includes a current collector including a sheet-shaped conductive substrate and a coating layer disposed on one or both sides of the conductive substrate, and a positive electrode active material layer disposed on the coating layer. The coating layer includes a powdery conductive material and a first binder.

(Conductive substrates)

The sheet-shaped conductive substrate of the positive electrode current collector may be made of any metal material without limitation. Any substrate commonly used in a lithium battery current collector may be usually used. A foil of aluminum or aluminum alloy (hereinafter, collectively written simply as aluminum foil) may be preferably used due to excellent workability.

The material of the aluminum foil is not particularly limited and may be any of materials known as lithium battery current collectors. A pure aluminum foil, or an aluminum alloy foil containing 95 mass% or more aluminum is preferable. Examples of the pure aluminum foils include A1085. Examples of the aluminum alloy foils include A3003 (Mn-doped).

The thickness of the sheet-shaped conductive substrate is not particularly limited. From points of view such as battery miniaturization, and the handling properties of the substrate and components obtained therewith such as the current collector and the electrode, it is usually preferable that the thickness be 5 to 200 $\mu$m. When roll-to-roll processing is adopted, the thickness is preferably 5 to 100 $\mu$m.

The sheet-shaped conductive substrate may be a foil without holes, or may be a perforated sheet. Examples of the perforated sheets include two-dimensionally perforated sheets such as mesh sheets and punched metal foils, and three-dimensionally perforated sheets such as porous sheets (metal foam sheets).

The surface of the conductive substrate may be treated by a known surface treatment such as, for example, surface machining, etching, chemical conversion, anodization, wash primer treatment, corona discharging or glow discharging.

(Coating layers)

On one or both sides of the sheet-shaped conductive substrate, a coating layer is disposed which includes a powdery conductive material and a first binder.

The thickness of the coating layer is preferably 0.1 to 5.0 $\mu$m, more preferably 0.3 to 3.0 $\mu$m, and still more preferably 0.5 to 2.0 $\mu$m. When the thickness is in this range, the film can be formed uniformly without cracks or pinholes, and the increase in battery weight stemming from large thickness and the internal resistance of the electrode can be reduced.

The coating layer may be formed on part of the surface of the conductive substrate, or may be formed on the entire surface. When the formation takes place on part of the surface of the conductive substrate, the coating layer may be formed over the entirety of the predetermined area of the surface of the conductive substrate, or may be formed in a pattern such as a dot pattern or a line and space pattern.

(Powdery conductive materials)

The powdery conductive material used in the coating layer may be a carbonaceous material or a metal powder, and may be preferably a carbonaceous material.

Some preferred carbonaceous materials are carbon blacks such as acetylene black, Ketjen black and furnace black, carbon fibers such as carbon nanotubes and carbon nanofibers, and graphite microparticles. Carbon blacks are more preferable because they have excellent dispersibility and offer a large surface roughness. The carbonaceous materials may be used singly, or two or more may be used in combination.

The powdery conductive material may be spherical or amorphous particles, or may be anisotropically shaped particles such as acicular or rod-like particles.

The number average particle size (the arithmetic average size) of the primary particles of the powdery conductive material is preferably 10 to 500 nm, more preferably 10 to 100 nm, and still more preferably 10 to 50 nm. When the number average particle size of the primary particles of the powdery conductive material is in this range, the powdery conductive material exhibits good dispersibility and can represent a large population per unit area of the coating layer, thus making it possible to reduce the resistance more effectively. The number average particle size of the powdery conductive material is obtained by measuring the primary particle sizes of 100 to 1000 particles of the powdery conductive material with an electron microscope, and calculating the arithmetic average thereof. In an electron micrograph, the particle sizes of circular particles are the equivalent circular diameters (the diameters of circles of the same area as the shapes that are observed), and the particle sizes of amorphous particles are the maximum lengths.

The content of the powdery conductive material in the coating layer is preferably 20 to 80 mass%, more preferably 30 to 70 mass%, and still more preferably 35 to 65 mass%. When the content of the powdery conductive material in the coating layer is in this range, the coating layer attains enhanced conductive properties and offers enhanced electrical conductivity between the conductive substrate and the positive electrode active material layer.

(First binders)

The coating layer includes a first binder, in addition to the powdery conductive material.

The first binder is not particularly limited as long as it can bind the particles of the powdery conductive material to one another, or can bind together the powdery conductive material and the conductive substrate. The first binder is preferably a polymer having a weight average molecular weight of $1.0 \times 10^4$ to $2.0 \times 10^5$, and more preferably $5.0 \times 10^4$ to $2.0 \times 10^5$. When the weight average molecular weight is in this range, the coating layer may be formed from the polymer and the powdery conductive material with excellent workability and attains excellent strength.

The content of the first binder in the coating layer is preferably 20 to 80 mass%, more preferably 30 to 70 mass%, and still more preferably 35 to 65 mass%.

When the content of the first binder in the coating layer is 20 mass% or more, the coating layer ensures good adhesion with respect to the conductive substrate and does not drop the powdery conductive material. When the mass proportion of the first binder is 80 mass% or less, the coating layer contains a sufficient proportion of the powdery conductive material and can maintain high conductive properties.

Examples of the polymers for use as the first binders include acrylic polymers, vinyl polymers, polyvinylidene fluorides, styrene-butadiene rubbers and polysaccharides.

Examples of the acrylic polymers include homopolymers and copolymers of acrylic monomers such as acrylic acid, methacrylic acid, itaconic acid, (meth)acryloylmorpholine, N,N-dimethyl (meth)acrylamide, N,N-dimethylaminoethyl (meth)acrylate and glycerol (meth)acrylate.

Examples of the vinyl polymers include polyvinyl acetal, ethylene-vinyl alcohol copolymer, polyvinyl alcohol, poly(N-vinylformamide) and poly(N-vinyl-2-pyrrolidone).

The polysaccharides are polymers formed by polycondensation of monosaccharides, and may be homopolysaccharides or heteropolysaccharides. Specific examples include chitin, chitosan, cellulose, and derivatives thereof, with chitosan being preferable.

The coating layer may include a single kind of polymer, or two or more kinds of polymers. When the coating layer includes two or more kinds of polymers, the two or more polymers may be a mixture or may form a crosslinked structure, an interpenetrating polymer network or a semi-interpenetrating polymer network, and preferably form a crosslinked structure, an interpenetrating polymer network or a semi-interpenetrating polymer network.

(Polysaccharides)

Of the polymers used as the first binders, in particular, polysaccharides impart an outstanding resistance against nonaqueous electrolytic solutions to the coating layer that is obtained. This advantageous effect is probably ascribed to the dense quality of the coating layer containing the polysaccharide.

Polysaccharide derivatives may also be used. Examples of such derivatives include hydroxyalkylated derivatives, carboxyalkylated derivatives, and sulfate esterified derivatives. In particular, hydroxyalkylated derivatives are advantageous in that they exhibit higher solubility in solvents and facilitate the formation of the coating layer. Examples of the hydroxyalkyl groups include hydroxyethyl group, hydroxypropyl group and glyceryl group, with glyceryl group being preferable. The hydroxyalkylated polysaccharides may be produced by known methods.

(Organic acids)

When the coating layer includes a polysaccharide as the first binder, the coating layer preferably contains an organic acid as an additive. In a coating liquid that will be described later, the organic acid serves to enhance the dispersibility of the polysaccharide into a solvent. A divalent or polyvalent organic acid is advantageous in that the organic acid forms ester bonds with the polysaccharide during thermal drying of the coating liquid so as to crosslink the polysaccharide and to offer an enhanced resistance of the coating layer against electrolytic solutions. From the point of view of crosslinking density, a trivalent or polyvalent organic acid is more preferable. The organic acid may be present as a free component in the coating layer, but is preferably bonded to the polysaccharide as described above. When present as a free component, the organic acid may be a free acid or a derivative such as an acid anhydride.

Examples of the organic acids which may be added to the coating layers include carboxylic acids, sulfonic acid and phosphonic acid, with carboxylic acids being preferable. Examples of the carboxylic acids include phthalic acid, trimellitic acid, pyromellitic acid, succinic acid, maleic acid, citric acid and 1,2,3,4-butanetetracarboxylic acid, with pyromellitic acid and 1,2,3,4-butanetetracarboxylic acid being preferable. The organic acids may be used singly, or two or more may be used in combination.

The organic acid is preferably added in an amount of 40 to 120 parts by mass, and more preferably 40 to 90 parts by mass per 100 parts by mass of the polysaccharide. This amount of the organic acid ensures that the coating layer will attain a high crosslinking density and an enhanced resistance to electrolytic solutions.

(Other additives)

In addition to the powdery conductive material and the first binder, the coating layer may contain an additive such as a dispersion stabilizer, a thickener, an anti-settling agent, an anti-skinning agent, an antifoaming agent, an electrostatic coatability modifier, an anti-sagging agent, a leveling agent, a crosslinking catalyst and a cissing inhibitor.

(Surface roughness of current collector)

In the current collector according to the present invention, the difference represented by (Ra1 - Ra2) is 0.10 to 0.40 $\mu$m, preferably 0.10 to 0.35 $\mu$m, more preferably 0.10 to 0.30 $\mu$m, still more preferably 0.10 to 0.20 $\mu$m, and particularly preferably 0.10 to 0.15 $\mu$m, wherein Ra1 is the surface roughness of the coating layer and Ra2 is the surface roughness of the surface of the conductive substrate covered by the coating layer. Here, the surface roughness is the arithmetic average roughness (Ra) calculated using the parameters specified in JIS B0601: 2001, based on the surface profile data obtained with a scanning laser microscope.

If the difference in surface roughness (Ra1 - Ra2) is below 0.10 $\mu$m, the protrusions on the surface of the coating layer are so small that the adhesion between the coating layer and the positive electrode active material layer is lowered and also the contact resistance at the interface between the positive electrode active material layer and the current collector is increased. If the difference in surface roughness (Ra1 - Ra2) is more than 0.40 $\mu$m, the thickness of the coating layer is correspondingly large and the electrical resistance through the coating layer is increased.

The following are the reasons as to why the difference in surface roughness (Ra1 - Ra2) is adopted as the indicator of surface roughness of the current collector of the present invention.

The surface roughness R1, of the coating layer disposed on the conductive substrate, measured with a surface profiler is the result of superimposition of the very fine (on the order of several hundreds of nanometers) roughness component that is the surface roughness of the coating layer itself, and the longer period (on the order of several micrometers) surface roughness R2 of the conductive substrate that lies under the coating layer. Here, the surface roughness that contributes to the adhesion with respect to the positive electrode active material layer will be the very fine roughness component that is the surface roughness of the coating layer itself. It will be therefore appropriate that the indicator of surface roughness in the study of the interfacial adhesion between the coating layer and the positive electrode active material layer be the roughness component that is the surface roughness of the coating layer itself, obtained by subtracting the surface roughness Ra2 of the conductive substrate from the surface roughness Ra1 of the coating layer (Ra1 - Ra2).

[Positive electrode active material layers for lithium ion secondary batteries]

A positive electrode active material layer is disposed on the coating layer of the current collector for lithium ion secondary batteries. The positive electrode active material layer includes a positive electrode active material, a conductive auxiliary and a second binder.

(Positive electrode active materials)

The positive electrode active material may be one, or two or more which are selected appropriately from known positive electrode active materials for lithium batteries capable of adsorbing and desorbing lithium ions. In particular, lithium-metal oxides capable of adsorbing and desorbing lithium ions are preferable. The lithium-metal oxide may be a composite oxide containing lithium and at least one element selected from, for example, Co, Mg, Cr, Mn, Ni, Fe, Al and Ti.

Specific examples of the compounds suitably used as the positive electrode active materials include lithium cobalt oxide ($LiCoO_2$), lithium manganese oxide ($LiMn_2O_4$), lithium nickel oxide ($LiNiO_2$), ternary lithium compounds ($Li(Co_xMn_yNi_z)O_2$) resulting from substitution of lithium cobalt oxide with Mn and Ni in place of part of Co, ternary lithium compounds ($Li(Ni_xCo_yAl_z)O_2$) resulting from substitution of lithium nickel oxide with Co and Al in place of part of Ni, and olivine compounds ($LiFePO_4$, $LiMnPO_4$).

The 50% particle size ($D_{50}$) in a volume-based cumulative grain size distribution of the positive electrode active material is not particularly limited, but is preferably 1.0 to 20.0 $\mu$m, more preferably 2.0 to 15.0 $\mu$m, and still more preferably 3.0 to 10.0 $\mu$m. When $D_{50}$ is 1.0 $\mu$m or more, the powder exhibits good handleability and can be formed into a slurry easily. When $D_{50}$ is 20.0 $\mu$m or less, good output characteristics are obtained. The 50% particle size ($D_{50}$) in a volume-based cumulative grain size distribution is measured with a laser diffraction gain size distribution analyzer (for example, LMS-2000e manufactured by SEISHIN ENTERPRISE Co., Ltd.).

The content of the positive electrode active material in the positive electrode active material layer is preferably 70.0 to 98.0 mass%, more preferably 72.0 to 97.5 mass%, and still more preferably 78.0 to 97.0 mass%. When the content of the positive electrode active material is 70 mass% or more, the energy density of the battery is maintained at a satisfactory level. When the content of the positive electrode active material is 98% or less, the layer contains required amounts of the conductive auxiliary and the binder, and thus attains satisfactory levels of output characteristics and adhesion strength.

(Conductive auxiliaries)

The conductive auxiliary added to the active material layer may be selected appropriately from known conductive auxiliaries for lithium battery electrodes. Some preferred materials are carbon blacks such as acetylene black, furnace black and Ketjen black, carbon fibers such as carbon nanotubes and carbon nanofibers, and graphite microparticles. The conductive auxiliaries may be used singly, or two or more may be used in combination as required.

The content of the conductive auxiliary in the positive electrode active material layer is preferably 0.5 to 20.0 mass%, more preferably 0.7 to 15.0 mass%, and still more preferably 0.9 to 13.0 mass%. When the content of the conductive auxiliary is 0.5 mass% or more, an increase in electrode resistance is avoided and satisfactory high-current characteristics can be obtained. When the content of the conductive auxiliary is 20.0 mass% or less, the energy density is maintained at a satisfactory level; further, a slurry viscosity suited for coating process can be obtained without excessive addition of a solvent, and the coating can be dried quickly without segregation of the binder and the conductive auxiliary.

The required amount of the conductive auxiliary is variable depending on the density or shape of the conductive auxiliary that is used, and the conductive properties, density or particle size of the active material itself, and it is not necessarily appropriate to define the amount by mass ratio alone. When, for example, the conductive auxiliary is added to lithium cobalt oxide having a density of 5.0 g/cm$^3$ and a particle size of several micrometers, and to iron lithium phosphate having a density of 3.6 g/cm$^3$ and a particle size of several hundreds of nanometers in the same mass ratios, the count of the conductive auxiliary particles per unit surface area of a single active material particle is by far larger in the former case.

Further, the count of the conductive auxiliary particles in a given mass varies significantly between when the conductive auxiliary is of relatively high density and relatively large particle size, such as graphite, and when the conductive auxiliary is of relatively low density and relatively small particle size, such as Ketjen black. Such a great difference will naturally give rise to a difference in conductivity of the positive electrode active material layer. Thus, in the present invention, the amount of the conductive auxiliary contained in the positive electrode active material layer is determined in terms of the mass ratio (the content) of the conductive auxiliary in the positive electrode active material layer and also in consideration of the volume resistivity of the positive electrode active material layer. In the present invention, the volume resistivity of the positive electrode active material layer is a volume resistivity measured by a method in accordance with JIS K 7194.

The method for measuring the volume resistivity in accordance with JIS K 7194 is not particularly limited. Specifically, for example, the measurement may be made as follows. An electrode slurry including the positive electrode active material, the conductive auxiliary, the second binder and a solvent is applied to an insulating film (for example, a PET film), and dried. The film coated with the positive electrode active material layer is punched into a predetermined area, and the volume resistivity of the active material layer is measured with a four-probe resistivity meter (for example, Loresta manufactured by Mitsubishi Chemical Analytech Co., Ltd.). The volume resistivity of the positive electrode active material layer is preferably 0.90 to 60.0 $\Omega \cdot$cm.

(Second binders)

The second binder may be selected appropriately from materials known as binders used in electrodes for lithium batteries. Examples of such binders include fluorine-containing high-molecular polymers such as polyvinylidene fluoride (PVDF), vinylidene fluoride-acrylic acid copolymer, vinylidene fluoride-maleate ester copolymer, vinylidene fluoride-hexafluoropropylene copolymer, vinylidene fluoride-chlorotrifluoroethylene copolymer and vinylidene fluoride-tetrafluoroethylene copolymer, styrene-butadiene copolymer rubber (SBR) and styrene-acrylate ester copolymer rubber.

(Void content)

In the electrode of the invention for lithium ion secondary batteries, the void content in the positive electrode active material layer is 43 to 64%, and preferably 56 to 64%. In the present invention, the void content in the positive electrode active material layer is the volume proportion of voids contained in the positive electrode active material layer relative to the volume of the entirety of the positive electrode active material layer.

The void content is measured in the following manner.

An electrode slurry containing the positive electrode active material, the conductive auxiliary, the second binder and a solvent is spread on a tray and is thermally dried to evaporate the solvent. The residue is thereafter vacuum dried to completely remove the solvent. The whole of the solid thus obtained is subjected to a measurement of true density by a pycnometer method, the result being denoted as $\rho_1$. Next, an electrode slurry that is identical with the electrode slurry described above is applied onto a current collector and is dried, thereby fabricating a positive electrode. The bulk density of the active material layer of the positive electrode thus fabricated is measured, the result being denoted as $\rho_2$. The void content is calculated from the following equation.

$$\text{Void content} = (1 - (\rho_2/\rho_1)) \times 100 \; [\%]$$

Here, the bulk density of the positive electrode active material layer may be measured by, for example, the following method. The positive electrode and the current collector fabricated above are each punched into the same area (S), and their respective weights and thicknesses are measured. The weight of the current collector (Wc) is subtracted from the weight of the positive electrode (We) to determine the weight of the positive electrode active material layer alone (Wa). Further, the thickness of the current collector (dc) is subtracted from the thickness of the positive electrode (de) to determine the thickness of the positive electrode active material layer alone (da). The bulk density is calculated from the following equation.

$$\text{Bulk density } (\rho_2) \text{ of active material layer} = \text{Wa}/(\text{da} \times \text{S})$$

Here, Wa = We - Wc, and da = de - dc.

[Methods for producing positive electrodes for lithium ion secondary batteries]

(Formation of coating layer)

The coating layer may be formed on the sheet-shaped conductive substrate by, for example, a gas phase process such as sputtering, deposition or chemical vapor growth process, or a coating process such as dipping or printing. It is preferable to use a coating process capable of roll-to-roll continuous application at low cost.

Specifically, numerous known coating processes such as casting, bar coating, dipping and printing may be used. To take advantage of easy controlling of the coating thickness, bar coating, gravure coating, gravure reverse coating, roll coating, Meyer bar coating, blade coating, knife coating, air knife coating, comma coating, slot die coating, slide die coating and dip coating are preferable. When the coating layers are formed on both sides, the coating operation may be performed on each side separately or on both sides concurrently.

When a coating process is adopted to form the coating layer, a coating liquid that is a solution or dispersion of the powdery conductive material and the first binder in a solvent is applied onto the conductive substrate and is dried. When additives are to be added to the coating layer, such additives are added to the coating liquid. Alternatively, the coating layer may be formed in such a manner that a binder precursor or an additive precursor is added to the coating liquid, and the coating liquid is applied and subjected to a drying step or a posttreatment step in which the precursor is converted to the binder or the desired additive in the coating layer.

When, for example, the organic acid described hereinabove is contained as an additive in the coating layer, such an organic acid in the free state may be contained in the coating liquid. Alternatively, an acid derivative such as an acid anhydride or an ester may be used, and may be dissociated into the free state or may be bonded to the polysaccharide by heating. For the reason that no byproducts are produced by heating and drying of the coating liquid, the coating liquid preferably contains the organic acid in the free state or the acid anhydride. When the first binder contained in the coating layer is an acrylic polymer or a vinyl polymer, the polymer itself may be contained in the coating liquid, or the monomer for forming such a polymer may be contained in the coating liquid and may be polymerized in the coating layer by a method such as heating or irradiation.

Examples of the solvents for use in the coating liquid for forming the coating layer include aprotic polar solvents such as N-methyl-2-pyrrolidone and γ-butyrolactone, protic polar solvents such as ethanol, isopropyl alcohol and n-propyl alcohol, and water. The amount of the solvent in the coating liquid is preferably 20 to 99 mass%, and more preferably 50 to 98 mass%. This amount of the solvent ensures that excellent workability such as coatability will be obtained and the coating liquid will be applied in an appropriate amount.

The coating liquid applied onto the conductive substrate may be dried by any process without limitation. Preferably, the wet film is heated at a temperature in the range of 100 to 300°C, or more preferably 120 to 250°C, for 10 seconds to 10 minutes. Heating under these conditions can remove the solvent completely without causing a decomposition of the first binder or the additives in the coating liquid, and allows a coating layer to be formed with an excellent surface profile and with a high throughput. In the case where the coating liquid contains a precursor that will form the first binder or the desired additive when heated, the above heating conditions ensure that the conversion reaction of the precursor to the first binder or the additive will proceed to a sufficient extent.

The coating amount (the basis weight) of the coating layer per side of the conductive substrate is preferably 0.1 to 5.0 g/m$^2$, and more preferably 0.5 to 3.0 g/m$^2$. When the coating amount is in this range, the layer can cover the surface of the conductive substrate uniformly without giving rise to an increase in electrical resistance stemming from its thickness.

The coating amount is measured in the following manner. A portion of the current collector is cut to give a specimen of any size including the coating layer, and the area and mass of the specimen are measured. Thereafter, the coating layer is stripped from the current collector piece with use of a stripping agent. The mass of the conductive substrate cleaned of the coating layer is measured. The mass of the conductive substrate cleaned of the coating layer is subtracted from the mass of the current collector piece including the coating layer. The difference thus obtained as the mass of the coating layer is divided by the area of the current collector piece to determine the coating amount per unit area. General stripping agents for removing paints or resins may be used as long as they are not corrosive to the conductive substrate (metal foil).

(Formation of positive electrode active material layer)

The positive electrode active material layer may be formed by applying a slurry that is a solution or dispersion of the positive electrode active material, the conductive auxiliary and the second binder in a solvent, onto the coating layer of the current collector of the invention for lithium ion secondary batteries, followed by drying. Here, the second binder may be generally PVDF or the like that can be dissolved into an organic solvent. An aqueous slurry including SBR, an acrylic resin or the like may also be used.

[Lithium ion secondary batteries]

A lithium ion secondary battery of the present invention includes the above-described positive electrode for lithium ion secondary batteries. The lithium ion secondary battery includes, in addition to the positive electrode, a negative electrode, a separator and an electrolyte. In the secondary battery, the separator, and the electrolyte or an electrolytic solution including the electrolyte are disposed between the positive electrode and the negative electrode, and all these components are accommodated in an exterior case.

(Negative electrodes)

Any negative electrodes generally used in lithium ion secondary batteries may be used without limitation. In most cases, the negative electrode has a structure in which a negative electrode active material layer is disposed on a current collector. The negative electrode active material layer includes a negative electrode active material, a conductive auxiliary and a binder.

The negative electrode active material may be one, or two or more which are selected appropriately from known negative electrode active materials for lithium batteries capable of adsorbing and desorbing lithium ions. Examples of such materials capable of adsorbing and desorbing lithium ions include carbon materials, Si or Sn, and alloys and oxides including at least one of Si and Sn. Of these materials, carbon materials are preferable. Typical examples of the carbon materials include natural graphites, artificial graphites produced by heat treating petroleum or coal cokes, hard carbons obtained by carbonizing resins, and mesophase pitch-based carbon materials.

The conductive auxiliary for the negative electrode may be selected appropriately from generally known conductive auxiliaries for negative electrodes of lithium batteries. For example, some preferred materials are carbon blacks such as acetylene black, furnace black and Ketjen black, and vapor grown carbon fibers.

The binder for the negative electrode may be selected appropriately from known binders for lithium battery electrodes. For example, some preferred materials are polyvinylidene fluoride (PVDF), styrene-butadiene copolymer rubber (SBR) and acrylic resin.

The negative electrode current collector is preferably a copper foil. The material of the copper foil is not particularly limited, but an electrolytic copper foil having an antirust surface is preferable.

The negative electrode is fabricated by dissolving or dispersing the negative electrode active material, the conductive auxiliary and the binder into a solvent, applying the resultant slurry onto the current collector, and drying the wet film.

(Separators)

Examples of the separators include polyethylene separators, polypropylene separators, multilayer film separators including a polyethylene film and a polypropylene film, and wet or dry porous film separators in which these resin separators are coated with heat-resistant inorganic materials such as ceramics, or with binder resins.

(Electrolytes and electrolytic solutions)

The electrolytic solution may be a solution of an electrolyte selected from lithium salts such as lithium hexafluorophosphate, lithium bis(trifluoromethanesulfonyl)imide and lithium bis(fluorosulfonyl)imide in a solvent or a mixed solvent of two or more solvents selected from, for example, ethylene carbonate, propylene carbonate, dimethyl carbonate, diethyl carbonate, methyl ethyl carbonate, acetonitrile and $\gamma$-butyrolactone.

EXAMPLES

The present invention will be described in greater detail by presenting Examples of the invention hereinbelow. Such Examples are only illustrative, and the scope of the present invention is not limited thereto.

[Production and evaluation of positive electrode current collectors and positive electrodes]

(Production Example 1)

(Production of positive electrode current collector)

A material was prepared by mixing 3.5 parts by mass of acetylene black HS-100 (DENKA BLACK (registered trademark) manufactured by Denka Company, pressed product, number average particle size of primary particles (hereinafter, sometimes written simply as primary particle size): 48 nm) as a powdery conductive material, 2.5 parts by mass of glycerylated chitosan (manufactured by Dainichiseika Color & Chemicals Mfg. Co., Ltd., deacetylation degree: 86 mol%, weight average molecular weight: $8.6 \times 10^4$) as a polysaccharide binder, 2.5 parts by mass of pyromellitic anhydride as an organic acid, and 160 parts by mass of N-methyl-2-pyrrolidone (special grade chemical).

The material obtained above was treated with a dissolver-type disperser (DISPERMAT CV3 manufactured by EKO Instruments) at a rotational speed of 300 rpm for 10 minutes and was further treated with a homogenizer (PRO200 manufactured by IEDA TRADING Corporation) at 20000 rpm for 30 seconds. Thus, a coating liquid was obtained in which the acetylene black was sufficiently dispersed.

Next, a 30 $\mu$m thick, alkali-cleaned aluminum foil made of A1085 was provided. With use of a Meyer bar, the coating liquid was applied by a bar coating process onto the entirety of one side of the aluminum foil. The wet film was thermally dried in the air at 180°C for 3 minutes. A positive electrode current collector 1 was thus obtained which had a coating layer including the conductive material on the surface of the aluminum foil.

(Coating amount and surface roughness of coating layer in positive electrode current collector)

A 100 mm $\times$ 100 mm portion was cut from the positive electrode current collector 1, and the coating layer was stripped using a stripping agent (NEOREVER #346 manufactured by SANSAI KAKO). The coating amount of the coating layer was measured by the aforementioned method to be 0.51 g/m$^2$ (Table 1).

Next, the surface roughness of the current collector (the surface roughness of the coating layer) was measured in the following manner. Surface profile data was obtained with x50 magnification using a shape measurement laser microscope (VK-X210 manufactured by KEYENCE CORPORATION). Based on the data obtained, the arithmetic average roughness Ra with respect to a 250 $\mu$m $\times$ 250 $\mu$m region was calculated using the parameters specified in JIS B0601: 2001, thereby determining the surface roughness Ra1 of the coating layer. Ra1 was 0.462 $\mu$m.

Separately, the surface roughness Ra2 of the aluminum foil as the conductive substrate was calculated in the similar manner as described above. Ra2 was 0.339 $\mu$m. The difference between the surface roughness of the coating layer and the surface roughness of the conductive substrate (Ra1 - Ra2) was 0.12 $\mu$m (Table 1).

(Production of positive electrode)

84 Parts by mass of $LiNi_{0.34}Mn_{0.33}Co_{0.33}O_2$ ($D_{50}$: 5.0 $\mu$m) as a positive electrode active material, 10 parts by mass of carbon black (Super C65 manufactured by Imerys) as a conductive auxiliary and 6 parts by mass of polyvinylidene fluoride (Kynar (registered trademark) HSV900 manufactured by Arkema) as a binder were dry mixed with a planetary mixer (TK HIVIS MIX 2P-03 manufactured by Primix). The mixture obtained was kneaded while adding thereto N-methyl-2-pyrrolidone. A slurry having a viscosity suited for coating process was thus obtained.

The slurry was applied onto a PET film and the positive electrode current collector over a width of 60 mm using an automated applicator (Auto Film Applicator PI-1210 manufactured by TESTER SANGYO CO., LTD.), was dried at 100°C and was further dried in a vacuum dryer (100°C). Non-pressed sample positive electrodes 1 were thus obtained.

(Resistances of positive electrodes)

Of the non-pressed positive electrodes 1, the non-pressed positive electrode 1 having the PET film was tested in accordance with JIS K 7194 to determine the volume resistivity of the positive electrode active material layer. The volume resistivity was measured to be 0.95 $\Omega\cdot$cm (Table 1).

Of the non-pressed positive electrodes 1, the non-pressed positive electrode 1 having the positive electrode current collector was punched to give two 20 mm $\times$ 100 mm rectangular sheets having a portion not coated with the active material layer on one end in the longitudinal direction. The two sheets of resistance measurement samples thus obtained were brought into contact to each other while ensuring that the sides having the positive electrode active material layer would be opposed to each other. The contact area was adjusted to 20 mm $\times$ 20 mm, and the sheets were placed onto a resin plate. A 1 kg/cm$^2$ load was applied to the mating surfaces in contact together so as to fix the mating surfaces. Terminal clips of an LCR meter (KC-555 manufactured by KOKUYO ELECTRIC Co., Ltd.) were attached to the portions not coated with the active material layer of the samples, and the resistance (the real part of complex impedance) at 1 kHz frequency was measured to be 200 m$\Omega$. In the present invention, this resistance will be referred to as the through resistance of the non-pressed positive electrode (Table 1).

(Production Example 2)

A positive electrode current collector was fabricated in the same manner as in Production Example 1, except that the acetylene black HS-100 used in Production Example 1 was replaced by acetylene black powder (DENKA BLACK (registered trademark) manufactured by Denka Company, powdery product, primary particle size: 35 nm). The coating amount of the coating layer, and the difference in surface roughness (Ra1 - Ra2) were evaluated. Non-pressed positive electrodes 2 were fabricated in the similar manner. The volume resistivity of the positive electrode active material layer, and the through resistance of the positive electrode were evaluated. The evaluation results are described in Table 1.

(Production Example 3)

A positive electrode current collector was fabricated in the same manner as in Production Example 1, except that the acetylene black HS-100 used in Production Example 1 was replaced by acetylene black FX35 (DENKA BLACK (registered trademark) manufactured by Denka Company, pressed product, primary particle size: 23 nm). The coating amount of the coating layer, and the difference in surface roughness (Ra1 - Ra2) were evaluated. Non-pressed positive electrodes 3 were fabricated in the similar manner. The volume resistivity of the positive electrode active material layer, and the through resistance of the positive electrode were evaluated. The evaluation results are described in Table 1.

(Production Example 4)

(Production of positive electrode current collector)

A positive electrode current collector was fabricated in the same manner as in Production Example 1, except that 3.5 parts by mass of the acetylene black HS-100 used in Production Example 1 was replaced by 7.5 parts by mass of KS6 (artificial graphite manufactured by Imerys, primary particle size: 3.4 $\mu$m) and that the amount of N-methyl-2-pyrrolidone was changed from 160 parts by mass to 240 parts by mass. The coating amount of the coating layer, and the difference in surface roughness (Ra1 - Ra2) were evaluated. Non-pressed positive electrodes 4 were fabricated in the similar manner. The volume resistivity of the positive electrode active material layer, and the through resistance of the positive electrode were evaluated. The evaluation results are described in Table 1.

[Table 1]

Table 1

| | Coating layer | | | | | Current collector | Positive electrode active material layer | | Non-pressed positive electrode |
|---|---|---|---|---|---|---|---|---|---|
| | Powdery conductive material (conductive agent) Number average particle size of primary particles | Amounts [parts by mass] (contents [mass%]) Conductive agent: polysaccharide: organic acid | Coating amount [g/m$^2$] | Ra1 [$\mu$m] | Ra1 - Ra2* [$\mu$m] | | Amounts [parts by mass] (contents [mass%]) Active material: conductive auxiliary: binder | Volume resistivity [$\Omega \cdot$cm] | Through resistance [m$\Omega$] |
| Prod. Ex. 1 | AB** HS-100 | 48 nm | 3.5:2.5:2.5 (41.2:29.4:29.4) | 0.51 | 0.462 | 0.12 | 84:10:6 (84:10:6) | 0.95 | 200 |
| Prod. Ex. 2 | AB powder | 35 nm | 3.5:2.5:2.5 (41.2:29.4:29.4) | 0.52 | 0.464 | 0.13 | 84:10:6 (84:10:6) | 0.95 | 170 |
| Prod. Ex. 3 | AB FX-35 | 23 nm | 3.5:2.5:2.5 (41.2:29.4:29.4) | 0.52 | 0.440 | 0.10 | 84:10:6 (84:10:6) | 0.95 | 200 |
| Prod. Ex. 4 | Graphite powder KS6 | 3.4 $\mu$m | 7.5:2.5:2.5 (60:20:20) | 0.50 | 0.398 | 0.06 | 84:10:6 (84:10:6) | 0.95 | 14400 |

*) Ra2: Surface roughness of conductive substrate (aluminum foil) = 0.339 $\mu$m
**) AB: Acetylene black

Referring to Table 1, the primary particle sizes of the acetylene blacks as the powdery conductive materials contained in the coating layers of Production Examples 1 to 3 were 23 to 48 nm, by far smaller than that of the graphite powder (primary particle size: 3.4 μm) contained in the coating layer of Production Example 4. In spite of this fact, the surface roughness Ra1 of the coating layer, and the difference in surface roughness (Ra1 - Ra2) were larger in Production Examples 1 to 3 than in Production Example 4.

In the acetylene blacks used in Production Examples 1 to 3, the primary particles were fused together to form primary clusters (aggregates) called structures, and these primary clusters gathered together to form secondary clusters (agglomerates). The size of the secondary clusters was on the order of micrometers and probably exerted an influence on the surface roughness of the coating layer. On the other hand, the graphite powder KS6 contained in the coating layer of Production Example 4 was flat particles, and the thickness of the particles was smaller than the average particle size, i.e., 3.4 μm. If flat particles are contained in a coating layer, the flat surfaces of the flat particles are oriented in parallel with the surface of the coating layer, and therefore the property that affects the surface roughness of the coating layer will be the thickness of the particles. Probably for the reasons described above, the coating layers in Production Examples 1 to 3 contained the secondary clusters of acetylene black which were larger than the thickness of the flat graphite particles in Production Example 4, and consequently the surface roughnesses Ra1 of these coating layers were larger.

Referring to Table 1, a comparison will be made among the values of through resistance of the non-pressed positive electrodes having the same positive electrode active material layers on current collectors with various levels of surface roughness difference (Ra1 - Ra2). It has been demonstrated that the through resistance of the non-pressed positive electrode is lowered when the difference between the surface roughness of the coating layer and the surface roughness of the conductive substrate (Ra1 - Ra2) in the current collector is 0.10 μm and above. As clear from the measurement technique, this difference in through resistance reflects the magnitude of contact resistance between the active material layer and the current collector. Thus, the results in Table 1 show that the contact resistance between the positive electrode active material layer and the current collector is low when the surface roughness difference (Ra1 - Ra2) in the current collector is 0.10 μm or more.

[Production of batteries and evaluation of battery characteristics]

(Example 1)

(Production of positive electrode)

A non-pressed positive electrode 1 (having a current collector, void content: 64%) fabricated as described in Production Example 1 was pressed with a roll press machine (manufactured by THANK METAL CO., LTD.) at a pressure of 11 t. The void content of the positive electrode active material layer was measured by the aforementioned method to be 43%. The true density of this positive electrode active material layer was measured by the aforementioned method using an automated pycnometer (Ultrapyc 1200e manufactured by Quantachrome Instruments) to be 3.649 g/cm$^3$. The electrode was punched into a predetermined size. A positive electrode 1-1 for evaluation of battery characteristics was thus obtained.

(Production of negative electrode)

Carboxymethylcellulose (CMC, #1380 manufactured by DAICEL FINECHEM LTD.) was mixed together with purified water. The mixture was stirred with a magnetic stirrer all night and all day to give an aqueous CMC solution.

96 Parts by mass of artificial graphite powder (SCMG (registered trademark)-AF manufactured by SHOWA DENKO K.K., average particle size: 6 μm) as a negative electrode active material and 1 part by mass of vapor grown carbon fibers (VGCF (registered trademark)-H manufactured by SHOWA DENKO K.K.) as a conductive auxiliary were dry mixed using a planetary mixer (TK HIVIS MIX 2P-03 manufactured by Primix). The mixture was kneaded while adding the aqueous CMC solution to give a viscous slurry. The total amount of the aqueous CMC solution added was such that 1.5 parts by mass of solid CMC was added. Lastly, styrene-acrylate ester synthetic rubber emulsion (Polysol (registered trademark) manufactured by SHOWA DENKO K.K.) as a binder was added, and the mixture was stirred to give a slurry having a viscosity suited for coating process. The amount of the synthetic rubber emulsion added was such that 1.5 parts by mass of solid synthetic rubber was added.

The slurry was applied onto a 20 μm thick copper foil using the automated applicator described hereinabove, was dried at 90°C and was further dried in a vacuum dryer (90°C). The coated foil was punched into a predetermined size, and was pressed with a single-screw press machine. A negative electrode was thus obtained which had a density of the negative electrode layer of 1.3 g/cm$^3$.

(Production of evaluation cell)

Next, a cell for battery characteristics evaluation was produced in the following manner in a dry argon atmosphere having a dew point of not more than -80°C.

A polypropylene microporous film (Celgard 2400 manufactured by Celgard, LLC., thickness: 25 μm) was provided as a separator. The positive electrode 1-1 and the negative electrode each having a current collecting lead welded thereto were arranged on both sides of the separator to form a stack. The stack was sandwiched between two aluminum laminate films, and three sides of the aluminum laminate films were thermally sealed. An electrolytic solution was poured through the open side to soak the stack, and the open side was thermally sealed while drawing a vacuum. An evaluation cell was thus fabricated.

The electrolytic solution was a solution of 1.2 mol/L lithium hexafluorophosphate as an electrolyte and 1 mass% vinylene carbonate as an additive in a mixed solvent including 3 parts by volume of ethylene carbonate and 7 parts by volume of ethyl methyl carbonate.

⟨Evaluation of direct current internal resistance (DC-IR)⟩

The evaluation cell was charged and discharged in the following manner. The cell was charged at a 0.2 C constant current rate from the rest potential to 4.2 V and, after 4.2 V, was charged at a constant voltage of 4.2 V. The charging was stopped when the current value fell to 1/20 C.

Next, the cell was discharged at a 0.1 C constant current rate for 5 hours to control the charging depth to 50%. The cell was then discharged at a 0.2 C constant current rate for 5 seconds, and the change in voltage ΔV before and after the discharging was measured. In the same way, the cell was further discharged at 0.5 C, 1.0 C and 2.0 C constant current rates each for 5 seconds, and the changes in voltage ΔV before and after the discharging were measured. Based on the data obtained, the values of ΔV at the respective currents were plotted on the ordinate axis against the current values on the abscissa axis. The direct current internal resistance (DC-IR) was calculated from the slope. The evaluation results are described in Table 2.

(Evaluation of high-current load characteristics)

The evaluation cell was charged and discharged in the following manner. First, the cell was charged at a 0.2 C constant current rate from the rest potential to 4.2 V and, after 4.2 V, was charged at a constant voltage of 4.2 V. The charging was stopped when the current value fell to 1/20 C.

Next, the cell was discharged at 0.2 C and 15.0 C constant current rates, respectively. The discharging was cut off at a voltage of 2.7 V.

The ratio of the 15.0 C discharge capacity to the 0.2 C discharge capacity was calculated as the 15 C discharge capacity retention. The evaluation results are described in Table 2.

(Evaluation of cycle characteristics)

The evaluation cell was charged and discharged in the following manner. The cell was charged at a 0.2 C constant current rate from the rest potential to 4.2 V and, after 4.2 V, was charged at a constant voltage of 4.2 V. The charging was stopped when the current value fell to 1/20 C. Thereafter, the cell was discharged at a 0.2 C constant current rate, and the discharging was cut off at a voltage of 2.7 V.

Next, the cell was charged at a 2.0 C constant current rate to 4.2 V and, after 4.2 V, was charged at a constant voltage of 4.2 V. The charging was stopped when the current value fell to 1/20 C. Next, the cell was discharged at a 2.0 C constant current rate, and the discharging was cut off at 2.7 V. This cycle of charging and discharging was repeated 1000 times (cycle test).

The evaluation cell after the cycle test was charged at a 0.2 C constant current rate to 4.2 V and, after 4.2 V, was charged at a constant voltage of 4.2 V. The charging was stopped when the current value fell to 1/20 C. Next, the cell was discharged at a 10.0 C constant current rate, and the discharging was cut off at a voltage of 2.7 V.

The ratio of the 10.0 C discharge capacity after the cycle test to the 0.2 C discharge capacity before the cycle test was calculated to determine the discharge capacity retention after 1000 cycles as an indicator of durability. The evaluation results are described in Table 2.

(Example 2)

An evaluation cell was fabricated in the same manner as in Example 1, except that the non-pressed positive electrode 1 was pressed at a lower pressure to give a positive electrode 1-2 having a void content in the positive electrode active material layer of 56%. The DC-IR characteristics, the high-current load characteristics and the cycle characteristics were evaluated in the similar manners. The evaluation results are described in Table 2.

(Example 3)

An evaluation cell was fabricated in the same manner as in Example 1, except that the non-pressed positive electrode 1 was used as a positive electrode 1-3 (void content in the positive electrode active material layer: 64%) directly without being pressed. The DC-IR characteristics, the high-current load characteristics and the cycle characteristics were evaluated in the similar manners. The evaluation results are described in Table 2.

(Comparative Example 1)

An evaluation cell was fabricated in the same manner as in Example 1, except that the non-pressed positive electrode 1 was pressed at a higher pressure to give a positive electrode 1-c1 having a void content in the positive electrode active material layer of 41%. The DC-IR characteristics, the high-current load characteristics and the cycle characteristics were evaluated in the similar manners. The evaluation results are described in Table 2.

(Comparative Example 2)

An evaluation cell was fabricated in the same manner as in Example 1, except that the non-pressed positive electrode 1 was pressed at a higher pressure to give a positive electrode 1-c2 having a void content in the positive electrode active material layer of 27%. The DC-IR characteristics, the high-current load characteristics and the cycle characteristics were evaluated in the similar manners. The evaluation results are described in Table 2.

(Example 4)

Non-pressed sample positive electrodes 5 were obtained in the same manner as in Production Example 1, except that 92 parts by mass of $LiNi_{0.34}Mn_{0.33}Co_{0.33}O_2$ ($D_{50}$: 5.0 $\mu$m) as a positive electrode active material, 4 parts by mass of carbon black (Super C65 manufactured by Imerys) as a conductive auxiliary and 4 parts by mass of polyvinylidene fluoride (Kynar (registered trademark) HSV900 manufactured by Arkema) as a binder were mixed together, and the resultant mixture was kneaded while adding thereto N-methyl-2-pyrrolidone to give a slurry. The non-pressed positive electrode 5 (the sample having the PET film) was tested in the same manner as in Production Example 1 to determine the volume resistivity of the positive electrode active material layer. The results are described in Table 2.

An evaluation cell was fabricated in the same manner as in Example 1, except that the non-pressed positive electrode 5 (the sample having the current collector) was used as a positive electrode 5-4 (void content in the positive electrode active material layer: 61%) directly without being pressed. The DC-IR characteristics, the high-current load characteristics and the cycle characteristics were evaluated in the similar manners. The evaluation results are described in Table 2.

(Comparative Example 3)

An evaluation cell was fabricated in the same manner as in Example 4, except that the non-pressed positive electrode 5 was pressed with the roll press machine at a pressure of 15 t to give a positive electrode 5-c3 having a void content in the positive electrode active material layer of 28%. The DC-IR characteristics, the high-current load characteristics and the cycle characteristics were evaluated in the similar manners. The evaluation results are described in Table 2.

(Example 5)

Non-pressed sample positive electrodes 6 were obtained in the same manner as in Production Example 1, except that 94 parts by mass of $LiNi_{0.34}Mn_{0.33}Co_{0.33}O_2$ ($D_{50}$: 5.0 $\mu$m) as a positive electrode active material, 3 parts by mass of carbon black (Super C65 manufactured by Imerys) as a conductive auxiliary and 3 parts by mass of polyvinylidene fluoride (Kynar (registered trademark) HSV900 manufactured by Arkema) as a binder were mixed together, and the resultant mixture was kneaded while adding thereto N-methyl-2-pyrrolidone to give a slurry. The non-pressed positive electrode 6 (the sample having the PET film) was tested in the same manner as in Production Example 1 to determine the volume resistivity of the positive electrode active material layer. The results are described in Table 2.

An evaluation cell was fabricated in the same manner as in Example 1, except that the non-pressed positive electrode 6 (the sample having the current collector) was pressed with the roll press machine at a pressure of 10 t to give a positive electrode 6-5 having a void content in the positive electrode active material layer of 43%. The DC-IR characteristics, the high-current load characteristics and the cycle characteristics were evaluated in the similar manners. The evaluation results are described in Table 2.

(Comparative Example 4)

An evaluation cell was fabricated in the same manner as in Example 1, except that the non-pressed sample positive electrode 4 (the sample having the current collector) fabricated by the method described in Production Example 4 was pressed with the roll press machine at a pressure of 11 t to give a positive electrode 4-c4 having a void content in the positive electrode active material layer of 45%. The DC-IR characteristics, the high-current load characteristics and the cycle characteristics were evaluated in the similar manners. The evaluation results are described in Table 2.

(Comparative Example 5)

An evaluation cell was fabricated in the same manner as in Comparative Example 4, except that the non-pressed positive electrode 4 was used as a positive electrode 4-c5 (void content in the positive electrode active material layer: 62%) directly without being pressed. The DC-IR characteristics, the high-current load characteristics and the cycle characteristics were evaluated in the similar manners. The evaluation results are described in Table 2.

(Comparative Example 6)

A positive electrode 7-c6 was fabricated in the same manner as in Example 1, except that no conductive material was applied to the surface of the aluminum foil (void content in the positive electrode active material layer: 44%). An evaluation cell was fabricated in the same manner as in Example 1 using this positive electrode. The DC-IR characteristics, the high-current load characteristics and the cycle characteristics were evaluated in the similar manners. The evaluation results are described in Table 2.

(Comparative Example 7)

A positive electrode 7-c7 was fabricated in the same manner as the positive electrode 7-c6 in Comparative Example 6, except that the sample positive electrode including the positive electrode active material layer on the aluminum foil was not pressed (void content in the positive electrode active material layer: 60%). An evaluation cell was fabricated in the same manner as in Example 1 using this positive electrode. The DC-IR characteristics, the high-current load characteristics and the cycle characteristics were evaluated in the similar manners. The evaluation results are described in Table 2.

[Table 2]

Table 2

| | Current collector | Positive electrode No. | $D_{50}$ [μm] of positive electrode active material | Amounts [parts by mass] (contents [mass%]) Active material: conductive auxiliary:binder | Volume resistivity [Ω·cm] of active material layer | Void content [%] in active material layer | DC-IR [Ω] | 15 C discharge capacity retention [%] | Discharge capacity retention [%] after 1000 cycles |
|---|---|---|---|---|---|---|---|---|---|
| | | | | Positive electrode | | | Battery characteristics | | |
| Ex. 1 | Prod. Ex. 1 | 1-1 | 5.0 | 84:10:6 (84:10:6) | 0.95 | 43 | 0.62 | 59 | 56 |
| Ex. 2 | | 1-2 | | | 0.95 | 56 | 0.62 | 60 | 57 |
| Ex. 3 | | 1-3 | | | 0.95 | 64 | 0.62 | 61 | 59 |
| Comp. Ex. 1 | | 1-c1 | | | 0.95 | 41 | 0.64 | 49 | 45 |
| Comp. Ex. 2 | | 1-c2 | | | 0.95 | 27 | 0.64 | 32 | 28 |
| Ex. 4 | Prod. Ex. 1 | 5-4 | 5.0 | 92:4:4 (92:4:4) | 16 | 61 | 0.65 | 50 | 50 |
| Comp. Ex. 3 | | 5-c3 | | | 16 | 28 | 0.65 | 28 | 28 |
| Ex. 5 | Prod. Ex. 1 | 6-5 | 5.0 | (94:3:3) | 56 | 56 | 0.73 | 53 | 52 |
| Comp. Ex. 4 | Prod. Ex. 4 | 4-c4 | 5.0 | 84:10:6 (84:10:6) | 0.95 | 45 | 0.65 | 44 | 40 |
| Comp. Ex. 5 | | 4-c5 | | | 0.95 | 62 | 1.47 | 46 | 42 |
| Comp. Ex. 6 | Al foil | 7-c6 | 5.0 | 84:10:6 (84:10:6) | 0.95 | 44 | 1.22 | 46 | 39 |
| Comp. Ex. 7 | | 7-c7 | | | 0.95 | 60 | 3.20 | 3 | 19 |

Referring to Table 2, Examples 1 to 3, and Comparative Examples 1 and 2 involved the same current collectors ((Ra1 - Ra2) was 0.12 $\mu$m), used the positive electrode active material layers having the same compositions, and were different from one another in the void content in the positive electrode active material layer. Examples 1 to 3, in which the void contents were in the higher range (43 to 64%), attained excellent DC-IR, high-current load characteristics and cycle characteristics. Comparative Examples 1 and 2, in which the void contents were below the lower limit of the above range, resulted in unsatisfactory high-current load characteristics and poor cycle characteristics.

Examples 4 and 5 (using the same current collectors as in Examples 1 to 3) were different from Examples 1 to 3 in the composition of the positive electrode active material layer, but similarly satisfied the 43-64% void content, attaining excellent DC-IR, high-current load characteristics and cycle characteristics. Comparative Example 3, in which the type of the current collector and the composition of the positive electrode active material layer were the same as those in Examples 4 and 5 but the void content was below the lower limit of the above range, resulted in unsatisfactory high-current load characteristics and poor cycle characteristics.

On the other hand, Comparative Examples 4 and 5 were identical with Examples 1 to 3 in the composition of the positive electrode active material layer and were similar thereto in void content, but (Ra1 - Ra2) of the current collector was 0.06 $\mu$m and was smaller than that in Examples 1 to 3. In contrast to the expectation from the void contents falling in the high range (43 to 64%), the cells in these Comparative Examples failed to attain good DC-IR, high-current load characteristics or cycle characteristics.

As discussed above, the results in Table 2 show that good DC-IR, high-current load characteristics and cycle characteristics are attained when the difference in surface roughness (Ra1 - Ra2) in the current collector is 0.10 $\mu$m or above.

**Claims**

1.   A positive electrode for lithium ion secondary batteries, comprising a current collector comprising a sheet-shaped conductive substrate and a coating layer disposed on one or both sides of the conductive substrate, and a positive electrode active material layer disposed on the coating layer, wherein

the coating layer comprises a powdery conductive material and a first binder,

the positive electrode active material layer comprises a positive electrode active material, a conductive auxiliary and a second binder,

the void content in the positive electrode active material layer is 43 to 64%, and

the difference represented by (Ra1 - Ra2) is 0.10 to 0.40 $\mu$m wherein Ra1 is the surface roughness of the coating layer and Ra2 is the surface roughness of the surface of the conductive substrate covered by the coating layer.

2.   The positive electrode for lithium ion secondary batteries according to Claim 1, wherein the void content in the positive electrode active material layer is 56 to 64% .

3.   The positive electrode for lithium ion secondary batteries according to Claim 1 or 2, wherein the first binder is a polysaccharide.

4.   The positive electrode for lithium ion secondary batteries according to any one of Claims 1 to 3, wherein the powdery conductive material has a number average particle size of primary particles of 10 to 500 nm.

5.   The positive electrode for lithium ion secondary batteries according to any one of Claims 1 to 4, wherein the content of the powdery conductive material in the coating layer is 20 to 80 mass%.

6.   The positive electrode for lithium ion secondary batteries according to any one of Claims 1 to 5, wherein the coating amount of the coating layer per side of the conductive substrate is 0.1 to 5.0 g/m$^2$.

7.   The positive electrode for lithium ion secondary batteries according to any one of Claims 1 to 6, wherein the 50% particle size $D_{50}$ in a volume-based cumulative grain size distribution of the positive electrode active material is 1.0 to 20.0 $\mu$m.

8.   The positive electrode for lithium ion secondary batteries according to any one of Claims 1 to 7, wherein the content of the positive electrode active material in the positive electrode active material layer is 70.0 to 98.0 mass%.

9.   The positive electrode for lithium ion secondary batteries according to any one of Claims 1 to 8, wherein the content of the conductive auxiliary in the positive electrode active material layer is 0.5 to 20.0 mass%.

**10.** A lithium ion secondary battery comprising the positive electrode for lithium ion secondary batteries described in any one of Claims 1 to 9.

## INTERNATIONAL SEARCH REPORT

| International application No. |
| --- |
| PCT/JP2018/010938 |

### A. CLASSIFICATION OF SUBJECT MATTER
Int.Cl. H01M4/13(2010.01)i, H01M4/64(2006.01)i, H01M4/66(2006.01)i

According to International Patent Classification (IPC) or to both national classification and IPC

### B. FIELDS SEARCHED

Minimum documentation searched (classification system followed by classification symbols)
Int.Cl. H01M4/13, H01M4/64, H01M4/66

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2015-109264 A (SEMICONDUCTOR ENERGY LABORATORY CO., LTD.) 11 June 2015, paragraphs [0016], [0017], [0062], [0067], [0096] & US 2015/0111101 A1, paragraphs [0018], [0019], [0084], [0089], [0118] | 1–10 |
| A | JP 2012-129123 A (TOYOTA MOTOR CORPORATION) 05 July 2012 (Family: none) | 1–10 |
| A | JP 2015-011775 A (TOSHIBA CORPORATION) 19 January 2015 & US 2015/0004496 A1 | 1–10 |

☒ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 23.04.2018 | 15.05.2018 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/010938

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-079370 A (SONY CORPORATION) 11 March 2004 (Family: none) | 1-10 |
| A | JP 2012-074369 A (SHOWA DENKO KK) 12 April 2012 & US 2013/0196230 A1 & WO 2012/029328 A2 & KR 10-2013-0030779 A & CN 103097472 A | 1-10 |
| A | JP 2010-153262 A (ZEON CORPORATION) 08 July 2010 (Family: none) | 1-10 |
| A | JP 2016-004657 A (TOPPAN PRINTING CO., LTD.) 12 January 2016 (Family: none) | 1-10 |
| A | JP 2015-069898 A (TOPPAN PRINTING CO., LTD.) 13 April 2015 (Family: none) | 1-10 |

Form PCT/ISA/210 (continuation of second sheet) (January 2015)

**EP 3 605 666 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5371032 B

- JP 2015056318 A